# EUROPÄISCHE PATENTSCHRIFT

(11) **EP 0 822 368 B1**
(45) Veröffentlichungstag und Bekanntmachung des Hinweises auf die Patenterteilung: **19.09.2001**
(21) Anmeldenummer: 97113184.2
(22) Anmeldetag: 31.07.1997
(51) Int. Cl.: F16M 11/04

(54) **Tragarm für Steuergeräte, Kommandogehäuse und dergleichen**
Supporting arm for control apparatus, control cases and same
Bras de support pour appareils de commande, consoles de commande et analogues

(30) Priorität: 31.07.1996 DE 19630807
(43) Veröffentlichungstag der Anmeldung: 04.02.1998
(73) Patentinhaber: ROLEC Gehäuse-Systeme Rose + Rose GmbH & Co. KG, D-31737 Rinteln/Weser (DE)
(72) Erfinder: Memmesheimer, Günther, 46535 Dinslaken (DE)
(74) Vertreter: Brümmerstedt, Hans Dietrich, Dipl.-Ing.

(56) Entgegenhaltungen:
- EP-A- 0 330 027
- DE-A- 4 331 124
- DE-B- 1 225 726
- DE-U- 9 202 556
- GB-A- 921 415
- GB-A- 2 083 878

## Beschreibung

Die Erfindung betrifft einen Tragarm für Steuergeräte, Kommandogehäuse und dergleichen nach dem Oberbegriff des Anspruchs 1.

Tragarme dieser Art sind bekannt. Sie sind zum Teil als geschlossene Hohlkörper ausgebildet mit dem Nachteil, daß Kabel mit angeschlagenen Seriensteckern im allgemeinen nicht hindurchgeführt werden können und daß Kabel gleicher Farbe, sind mehrere von ihnen eingebracht, nicht zugeordnet werden können und umständlich durchgemessen werden müssen.

Aus DE 43 31 124 A1 ist eine Lösung bekannt, bei der extra zusätzliche Leisten oder Klammern im Innenraum eingebracht werden, die die jeweiligen Kabel gesondert lagefixieren, um sie zuordnen zu können. Zur Montage von Kabeln mit vorkonfektionierten Seriensteckern sind aufgeschlitzte Hohlkörper bekannt, in die die Kabel von oben eingelegt werden können. Da die Schlitzöffnungen meist die gesamte obere Fläche erfassen, verändert sich der Hohlkörper zu einem U-Profil und verliert damit weitestgehend seine Torsionssteifigkeit. Deshalb ist bei den Lösungen nach DE 92 02 556 U1, EP 0 330 027 B1 das U-Profil auf ein Trägerrohr aufgesattelt, derart, daß sie nur den unteren Steg des U-Kanal-Teils und den oberen des Tragrohrteils gemeinsam haben, ansonsten aber gesonderte Profil-Teile sind, die sich in der Höhe addieren, so daß durch die räumlich getrennte Zuordnung der Aufgaben: Tragen und Kabelaufnahme, ein relativ hohes Gesamtprofil entsteht, was auch voluminöse weitere Komponenten wie Gelenke, Anschlußteile usw. zur Folge hat. Um eine Erhöhung der Torsionssteifigkeit des Tragrohrteils ohne Zunahme des Volumens zu erreichen, sind in DE 92 02 556 U1 kreuzförmige Diagonalrippen eingebracht, wodurch aber eine komplizierte Innengeometrie des Tragrohrteils entsteht.

Aufgabe der Erfindung ist ein Tragarm der eingangs erwähnten Art, bei dem Kabel, Kabelstränge mit vorkonfektionierten Stekkern, auch wenn diese größer sind als die Kanalweiten, leicht einbringbar und bei Defekten leicht auswechselbar sind, die Zuordnung der Kabel bzw. Kabelstränge ohne Signalfarbe gewährleistet ist, die Bauhöhe und der Gesamtquerschnitt möglichst gering sind, bei guter Biege- und Torsionssteifigkeit und die mit einfacher Geometrie und einfacher Montage.

Die Erfindung ist nachfolgend anhand von in Zeichnungen dargestellten Ausführungsbeispielen erläutert. Es zeigen:
- Fig. 1: das Tragarmprofil mit den Kabelkanälen;
- Fig. 2: das Tragarmprofil mit den in die Kabelkanäle eingelegten Kabeln und den aufgeschobenen Abdeckleisten;
- Fig. 3: das Tragarmprofil mit Kabeln, aufgeschobenen Abdeckleisten und eingesetzten Spannhülsen und Schrauben in die dafür vorgegebenen Kanäle;
- Fig. 4: das Tragarmprofil mit Kabeln und einer eingelegten Abdeckleiste links, bevor sie nach unten ein- bzw. aufgeschoben wird und einer eingeschobenen Abdeckleiste rechts;
- Fig. 5: das Tragarmprofil mit eingelegten Kabeln, aufgeschobenen bzw. teilaufgeschobenen Abdeckleisten und mit je in einer der Nuten oben und unten angesetzten Schraubendrehern zum Schieben der Abdeckleisten.

Die Aufgabe wird durch die im kennzeichnenden Teil des Anspruchs 1 aufgeführten Merkmale gelöst. Der tragende Teil 1 ist - bezogen auf das Gesamtprofil - in die Mitte und zum Teil nach innen gelegt für die Biegesteifigkeit und das Ganze im wesentlichen als Doppel-T-Profil ausgebildet. Der senkrechte Steg 3 des Doppel-T-Profils ist an seinem oberen Ende, wo er in den waageechten Steg 4 übergeht, für die Torsionssteifigkeit zu einem längsgerichteten, zylindrischen Stabteil 1a verdickt, wodurch für Biege-, wie für Torsionssteifigkeit optimale Grundformen einstückig verbunden werden. Des weiteren wird der bei Doppel-T-Profilen naturgemäß materialfreie Raum auf beiden Seiten des senkrechten Stegs 3 als Installationskanal 2 genutzt, der durch senkrechte dünne Wände 7, die als Außenwände an die unteren waagerechten Stege des Doppel-T angeformt sind, abgeschlossen wird. Durch diese Verschachtelung von Kanal- und Tragteil wird eine Unterbringung beider auf kleinstem Raum erreicht.

Die vom senkrechten Steg, dem unteren waagerechten Steg 5 des Doppel-T-Profils und den senkrechten äußeren Seitenwänden 7 umschlossenen Räume bilden nach oben außen offene Kabelkanäle 2, in die die Kabel geordnet eingelegt werden können. Die Zuordnung der Kabel ist vor allem aufgrund der je gesonderten, definierten Lage, aber auch durch die von außen gegebene Einsehbarkeit der Kabelkanäle gesichert.

Die übrigen Komponenten des Tragarmsystems: Gelenke, Winkelstücke und Endverbinder sind so ausgeführt, daß vom Wanddurchgang durch die Gerätewand bzw. Anschlußwand bis zum Wanddurchgang in das Steuer- bzw. Kommandogehäuse alle Kabel durchgängig in dieser Weise einfach und geordnet eingelegt werden können.

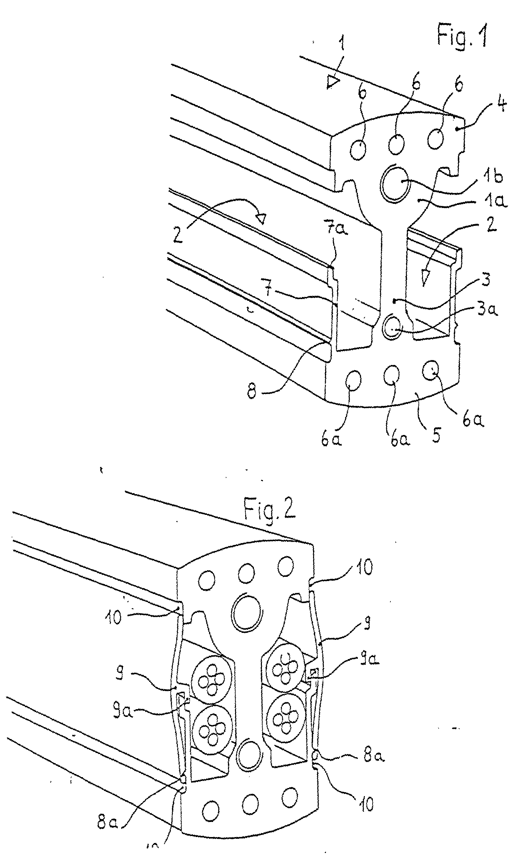

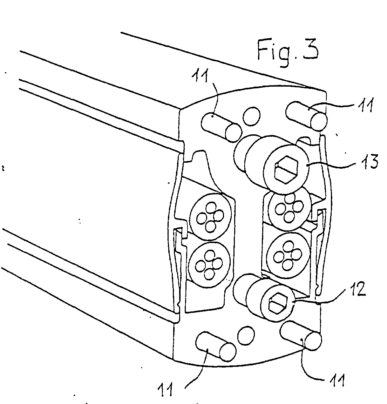

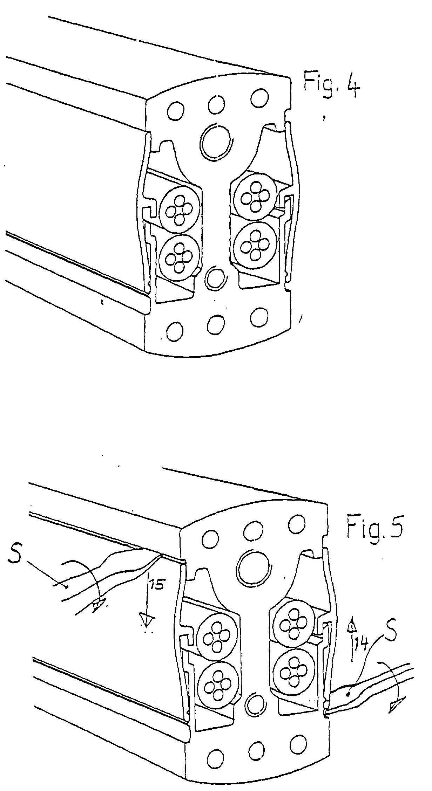

Die Verbindung zwischen dem Profil und den anderen Komponenten des Systems erfolgt als Steck- und Schraubverbindung. Die Profilteile werden mittels der in den waagerechten Stegen 4, 5 eingeformten Kanäle 6, 6a auf die in den anderen Komponenten, Endverbinder, Gelenke usw. an entsprechender Stelle stirnseitig eingepreßten Bolzen oder Spannhülsen gesteckt und vermittels der Hauptschraube 13 über den im Torsionsstab befindlichen Schraubkanal 1b und vermittels der Nebenschraube 12 über den im unteren senkrechten Steg befindlichen Schraubkanal 3a stirnseitig verbunden. Die Montage erfolgt in der Weise, daß zunächst das gesamte Tragsystem montiert wird und dann die Kabel in die Installationskanäle eingelegt werden, wonach die Abdeckleisten seitlich eingelegt und nach unten auf- bzw. eingeschoben werden 15. Hierbei greifen die Abdeckleisten mittels einer längsgestreckten angeformten Nase 9a hinter die Seitenwände, die oben mit Anzugschrägen (7a) versehen sind, die die leicht federnden Abdeckleisten beim Herunterschieben gegen die Seitenwände der waagerechten oberen und unteren Stege des Doppel-T drücken. Diese Andruckspannung wird auch für die am unteren Ende der Abdeckleiste angeordnete Rast 8, 8a benutzt (Fig. 1 und Fig. 2). Die Nut 10, die sich durch die vertiefte Anbringung der Abdeckleisten oben und unten zu den waagerechten Stegen hin bildet, ist zum leichteren Ein- und Aussetzen der Rast insofern hilfreich, als hier ein Schraubendreher S angesetzt werden kann, der sich beim Drehen gegen die Stegseite der Nut abstützt und die Abdeckleiste von dieser wegschiebt (Fig. 4 und 5). So kann die Abdeckleiste mit geringer Krafteinbringung nach unten 15 in die Rast geschoben werden, wenn man den Schraubendreher in die obere Nut einsetzt, oder nach oben 14 aus der Rast, wenn man ihn in die untere Nut einsetzt.

## Patentansprüche

1. Tragarm für Steuergeräte, Kommandogehäuse und dgl. mit einem Tragkörperabschnitt für die Biege- und Torsionssteifigkeit und einem Kanalprofilteil zur Unterbringung von Kabeln und dgl., **dadurch gekennzeichnet, daß**
- das tragende Teil (1) als Doppel-T-Profil ausgebildet ist, wobei der senkrechte Steg (3) zur Verbesserung der Biegesteifigkeit in die Mitte gelegt ist,
- der senkrechte Steg (3) des Doppel-T-Profils an seinem oberen, in den waagerechten Steg (4) übergehenden Ende zur Verbesserung der Torsionssteifigkeit zu einem längsgerichteten zylindrischen Stabteil (1a) verdickt ist,
- der bei Doppel-T-Profilen freie Raum auf beiden Seiten des senkrechten Stegs (3) als Installationskanal (2) nutzbar ist,
- der freie Raum durch senkrechte dünne Wände (7), die als Außenwände an die unteren waagerechten Stege (5) des Doppel-T-Profils angeformt sind, begrenzt ist.

2. Tragarm nach Anspruch 1 **dadurch gekennzeichnet, daß** der eingeformte Torsionsstab (1a) einen zentralen Kanal (1b) zur Aufnahme von Verbindungsschrauben besitzt und daß im oberen horizontalen Steg des Doppel-T Längskanäle (6) eingeformt sind für Scherbolzen, Spannhülsen und dergleichen (11).

3. Tragarm nach Anspruch 1 oder 2, **dadurch gekennzeichnet, daß** im unteren horizontalen Steg des Doppel-T, entsprechend zum oberen Steg, Längskanäle (6a) zur Aufnahme von Scherbolzen, Spannhülsen oder dergleichen (11) bzw. als Führungen für Bewegungen übertragende Teile eingeformt sind und daß ein weiterer Kanal zur Schraubenaufnahme (3a) im unteren Teil des senkrechten Stegs des Doppel-T eingeformt ist.

4. Tragarm nach Anspruch 1, **dadurch gekennzeichnet, daß** die senkrechten dünnen Wände (7) bis etwa zur Mitte der senkrechten Profilhöhe reichen.

5. Tragarm nach Anspruch 4, **dadurch gekennzeichnet, daß** die beiden seitlichen Kanäle durch aufgeschobene Abdeckleisten (9) verschlossen sind.

6. Tragarm nach Anspruch 5, **dadurch gekennzeichnet, daß** die Abdeckleisten so aufgeschoben werden, daß sie an den Seitenwänden der horizontalen Stege anliegen und mittels einer angeformten Nase (9a) auf die senkrechten Seitenwände (7) der Kabelkanäle geschoben werden, wobei die Lage der Flächen, auf die sich die Abdeckleiste abstützt, zueinander so angeordnet ist, daß sich im Abdeckstreifen eine Andruckspannung bildet.

7. Tragarm nach Anspruch 5, **dadurch gekennzeichnet, daß** an einer geeigneten Stelle im Andruckbereich von Abdeckung und Profilwand eine Rast (8) angeformt ist, die mit einer entsprechenden Ausformung (8a) der Abdeckung zusammenwirkt.

8. Tragarm nach Anspruch 3 bis 5, **dadurch gekennzeichnet, daß** die Abdeckung vertieft gegenüber den Seitenflächen der horizontalen Stege des Doppel-T eingelassen ist, so daß sich eine Nut (10) bildet, deren Breite etwa dreiviertel eines mittleren Schraubendrehers beträgt.

## Claims

1. Supporting arm for control equipment, control enclosures and the like having a supporting body portion for flexural and torsional rigidity and a duct section part for housing cables and the like, **characterised in that**
- the supporting part (1) is constructed as a double-T section, the vertical web (3) being placed in the middle in order to improve the flexural strength,
- at its upper end, that merges into the horizontal web (4), the vertical web (3) of the double-T section is thickened to produce a longitudinally oriented cylindrical rod section (1a) in order to improve the torsional rigidity,
- the free space on either side of the vertical web (3) in the case of double-T sections can be used as installation channel (2),
- the free space is delimited by vertical, thin walls (7), which are moulded, as outside walls, onto the lower horizontal webs (5) of the double-T section.

2. Supporting arm according to Claim 1, **characterised in that** the moulded torsion rod (1a) has a central channel (1b) for accommodating connecting screws and in that longitudinal channels (6) have been moulded in the upper horizontal web of the double-T for shear bolts, adapter sleeves and the like (11).

3. Supporting arm according to Claim 1 or 2, **characterised in that** longitudinal channels (6a) have been moulded in the lower horizontal web of the double-T, correspondingly to the upper web, for accommodating shear bolts, adapter sleeves and the like (11) or as guides for parts transmitting movements and in that a further channel (3a) for accommodating a screw has been moulded in the lower part of the vertical web of the double-T.

4. Supporting arm according to Claim 1, **characterised in that** the vertical, thin walls (7) extend approximately to the middle of the height of the vertical section.

5. Supporting arm according to Claim 4, **characterised in that** the two lateral channels are closed off by push-on cover strips (9).

6. Supporting arm according to Claim 5, **characterised in that** the cover strips are pushed on in such a way that they are in contact with the horizontal webs at the side walls and are pushed, by means of a moulded-on nose (9a), onto the vertical side walls (7) of the cable channels, the position of the surfaces on which the cover strip bears being so oriented with respect to one another that a contact stress is produced in the cover strip.

7. Supporting arm according to Claim 5, **characterised in that** a catch (8) is moulded on at a suitable point in the region of contact between cover and section wall, which catch (8) interacts with a corresponding recess (8a) in the cover.

8. Supporting arm according to Claim (sic) 3 to 5, **characterised in that** the cover is let in such that it is recessed with respect to the side faces of the horizontal web of the double-T so that a groove (10) is formed, the width of which is approximately three quarters of an average screwdriver.

## Revendications

1. Colonne-support pour appareils de commande, consoles de commande, etc., comportant une partie de profilé de support pour la rigidité en flexion et pour la rigidité en torsion, et une partie de profilé à canal pour le logement des câbles, etc.,
**caractérisée en ce que**
la partie portante est réalisée sous forme de profilé en double T dans lequel l'âme verticale (3) est placée au centre pour améliorer la rigidité en flexion,
l'âme verticale (3) du profilé en double T est, à son extrémité supérieure, épaissie au niveau de la traverse horizontale (4) ,pour améliorer la rigidité en torsion, en un barreau longitudinal et cylindrique (1a),
l'espace libre du profilé en double T des deux côtés de l'âme verticale (3) peut être utilisé comme canal d'installation (2),
l'espace libre est bordé par des parois verticales minces (7), prévues comme parois externes, sur les traverses inférieures horizontales (5) du profil en double T.

2. Colonne-support suivant la revendication 1, **caractérisée en ce que** le barreau de torsion (1a) présente un canal central (1b) pour loger les vis de liaison et en ce que, dans la traverse horizontale supérieure du double T, sont prévus des canaux longitudinaux (6) pour des goujons de cisaillement, des douilles de serrage, etc., (11).

3. Colonne-support suivant la revendication 1 ou 2, **caractérisée en ce que**, dans la traverse horizontale inférieure du double T, correspondant à la traverse supérieure, sont prévus des canaux longitudinaux (6a) pour loger des goujons de cisaillement, des douilles de serrage, etc., (11) ou comme glissières pour les mouvements des parties communicantes, et en ce qu'un autre canal est prévu pour loger des vis (3a) dans la partie inférieure de l'âme verticale du double T

4. Colonne-support suivant la revendication 1, **caractérisée en ce que** les parois minces verticales (7) atteignent à peu près le milieu de la hauteur verticale du profilé.

5. Colonne-support suivant la revendication 4, **caractérisée en ce que** les deux canaux latéraux sont obturés par des baguettes de recouvrement coulissantes (9).

6. Colonne-support suivant la revendication 5, **caractérisée en ce que** les baguettes sont glissées de façon qu'elles adhèrent fortement aux parois latérales de la traverse horizontale et, au moyen d'un talon préformé (9a), sont poussés sur les parois latérales verticales (7) des canaux de câbles, la position des surfaces sur laquelle s'appuie la baguette de recouvrement étant disposée l'une sur l'autre de façon que se crée une tension de serrage dans la bande de recouvrement.

7. Colonne-support suivant la revendication 5, **caractérisée en ce que**, à une position appropriée dans la zone de serrage du recouvrement et de paroi du profilé, est prévu un cran d'arrêt (8) qui coopère avec une saillie (8a) du recouvrement.

8. Colonne-support suivant la revendication 3 à 5, **caractérisée en ce que** le recouvrement est emboîté profondément contre les surfaces latérales de la traverse horizontale du double T de façon à créer une rainure (10) dont la largeur se monte à environ trois quart d'un tournevis moyen.
